# EUROPÄISCHE PATENTSCHRIFT

(11) **EP 1 375 038 B1**
(45) Veröffentlichungstag und Bekanntmachung des Hinweises auf die Patenterteilung: **16.02.2011**
(21) Anmeldenummer: 03405334.8
(22) Anmeldetag: 14.05.2003
(51) Int. Cl.: B23B 27/16

(54) **Decolletagewerkzeug in der Form einer Wendeschneidplatte**
Cut-off indexable insert
Plaquette amovible à tronçonner

(30) Priorität: 21.06.2002 CH 10632002
(43) Veröffentlichungstag der Anmeldung: 02.01.2004
(73) Patentinhaber: Utilis AG, 8555 Müllheim (CH)
(72) Erfinder: Macario, Mario, 9606 Bütschwil (CH); Bihari, Peter, 8268 Salenstein (CH)
(74) Vertreter: Schneider Feldmann AG Patent- und Markenanwälte

(56) Entgegenhaltungen:
- EP-A- 0 365 505
- US-A- 5 628 590

## Beschreibung

Die vorliegende Erfindung betrifft ein Verfahren zur Herstellung eines Decolletagewerkzeuges in der Form einer Wendeschneidplatte, sowie das nach diesem Verfahren hergestellte Decolletagewerkzeug.

Wendeschneidplatten werden seit vielen Jahren bereits im Sinterpressverfahren hergestellt. Auch Rohlinge für Decolletagewerkzeuge in der Form von Wendeschneidplatten werden bereits in einem Sinterpressverfahren hergestellt. Wendeschneidplatten haben je nach Verwendungszweck eine unterschiedliche Gestalt. So gibt es Wendeschneidplatten die zum Vorwärtsdrehen, zum Rückwärtsdrehen, zum Einstechen oder Längsdrehen oder zum Gewindeschneiden geeignet sind. Wendeschneidplatten mit Drehstahlhalteschäften, die mit einem Formschluss aufeinander passen und mittels einer Schraube gesichert sind, sind in vielen Ausführungsvarianten bekannt. Rein beispielsweise sei hier auf die EP-A-0'037'691, die DE-A-34'46'455, die DE-A-36'00'077, die EP-A-0'300'172 oder die EP-A-0'517'156 verwiesen.

Während die hier ausgeführten Werkzeuge für übliche spanabhebende Bearbeitungen geeignet sind, interessieren hier lediglich Ausführungsformen, die für Decolletagearbeiten geeignet sind.

Bei Decolletagearbeiten werden kleine Werkstücke in grossen Mengen bearbeitet. Hierbei werden oftmals viele Arbeitsgänge örtlich hintereinander oder parallel durchgeführt, wobei mehrere Drehstahlhalteschäfte in geringstmöglichem Abstand zueinander angeordnet sein sollen.

Hierbei stellen die Querschnitte der Drehstahlhalteschäfte mit den daran befestigten Wendeschneidplatten die limitierende Grösse. Um diese Grösse zu reduzieren, verwendet man für Decolletagewerkzeuge üblicherweise Wendeschneidplatten mit einem an der seitlichen Längsfläche, welche an den Drehstahlhalteschaft anliegt, angeformten parallelogrammförmigen Vorsprung, wobei die Befestigungsschraube die Wendeschneidplatte im Bereich des Vorsprunges durchsetzt.

Dies ergibt relativ komplexe Formen der Wendeschneidplatte. Diese hier beschriebene Technologie wurde bisher bei Wendeschneidplatten für Decolletagearbeiten nicht angewendet. Die im Bereich der Decolletage arbeitenden Fachleute sind sich gewohnt, die erforderlichen Wendeschneidplatten aus Rohlingen speziell selber zu gestalten. Entsprechend werden für Decolletagearbeiten lediglich Rohlinge als Wendeschneidplatten angeboten.

Bei der Decolletagearbeit ist die korrekte Spanabführung besonderes wesentlich, da die einzelnen Bearbeitungsstationen örtlich nahe beieinander liegen. Die Späne einer Station sollen daher nicht in den Bereich des benachbarten Arbeitsplatzes gelangen. Dies lässt sich bekanntlich mit entsprechenden Spanleitstufen erreichen. Da aber, wie bereits erwähnt, in Decolletagewerkstätten die Wendeschneidplatten anwendungsspezifisch gestaltet werden, sind Wendeschneidplatten-Rohlinge für Decolletagearbeiten nicht mit Spanleitstufen versehen, sondern diese bringt der Fachmann selber an, wenn er die Wendeschneidplatte nach seinen Wünschen spezifisch gestaltet. Hierbei handelt es sich aber eigentlich um einen Anachronismus. Fachleute, die in der Lage sind, basierend auf rein empirischen Erfahrungen aus gesinterten Rohlingen Wendeschneidplatten mit den gewünschten Spanleistungen zu fertigen, sind immer seltener anzutreffen. Die Fachwelt geht bis heute davon aus, dass die Fertigung von Wendeschneidplatten für Decolletagearbeiten mit spezifisch gestalteten Schneidkanten und Spanleistungen nicht mit der erforderlichen Präzision sinterbar sind, so dass eine Nachbearbeitung ohnehin erforderlich sei und sich folglich nicht lohne. Die Anmelderin hat mittels eigener Versuche sich davon überzeugt, dass es durchaus möglich ist, Decolletagewerkzeuge entgegen dem bestehenden Vorurteil direkt mit Spanleitstufen zu versehen und dabei hochpräzise Resultate zu erzielten.

Zwar zeigt die US-A-5G28590 auch Beispiele mit eingeformten Spanleitstufen, trotzdem aber keine nachbearbeitungsfreie Wendeschneidplatte. Spanleitstufenwulste und Spanleitstufenerhöhungen sind in der US-A-5628590 offenbart, doch werden die Schneidkanten dieser Wendeschneidplatten durch honen nachbearbeitet und stellen somit keine nachbearbeitungsfreie Wendeschneidplatten dar.

Die vorliegende Aufgabe bestand somit darin, das bestehende Vorurteil zu überwinden und zu überprüfen ob dieses bestehende Vorurteil bei den Wendeschneidplatten für Decolletagewerkzeuge noch eine Berechtigung hat.

Es hat sich erwiesen, dass sich Wendeschneidplatten für Decolletagewerkzeuge erfindungsgemäss direkt mit für die Bearbeitung sogleich tauglichen Spanleitstufen sintern lassen, ohne dass sich hierbei gegenüber dem bisher üblichen Verfahren von gesinterten Rohlingen mit nachträglich eingearbeiteten Spanleitstufen nachteilige Folgen ergeben.

Dass heute die Fachleute auf dem Gebiet von Decolletagearbeiten kaum mehr das mechanische, handwerkliche Können besitzen, um Wendeschneidplatten mit optimalen Spanleitstufen aus Rohlingen herstellen zu können, liegt daran, dass auch bei den Hochleistungsdrehmaschinen für Decolletagearbeiten Leute benötigt werden, die von der Softwaresteuerung und Programmierung hohe Kenntnisse besitzen. Entsprechend wird es immer schwieriger Leute zu finden, die sowohl diese Kenntnisse als auch die traditionellen Kenntnisse der mechanischen Bearbeitung von Wendeschneidplatten besitzen. Die Herstellung von Wendeschneidplatten für Decolletagewerkzeuge, die direkt mit den hochpräzisen Spanleitstufen versehen sind, ist daher ein wachsendes Bedürfnis.

In der beiliegenden Zeichnung sind zwei Ausführungsbeispiele von Wendeschneidplatten gemäss der Erfindung dargestellt und an Hand der nachfolgenden Beschreibung erläutert. Es zeigt:
- Figur 1: eine gesinterte Wendeschneidplatte für ein Decolletagewerkzeuge in der Seitenansicht und
- Figur 2: eine Teilansicht auf die Wendeschneidplatte nach Figur 1, die zum Einstechen und Längsdrehen geeignet ist;
- Figur 3: zeigt eine ebensolche Teilansicht auf eine Wendeschneidplatte, die zum Rückwärtsdrehen gestaltet ist und
- Figur 4: eine Wendeschneidplatte, die als Abstechwerkzeug gestaltet ist.

Die in der Zeichnung dargestellte Wendeschneidplatte bedingt einen entsprechend geformten Drehstahlhalteschaft, der hier nicht dargestellt ist. Hierbei handelt es sich üblicherweise um einen Metallstab aus hochwertigem Stahl, der einen rechteckigen, für Decolletagewerkzeuge meist quadratischen Querschnitt aufweist. Der Schaft weist eine entsprechende Ausfräsung auf, die in der Tiefe mindestens annähernd der Dicke der Wendeschneidplatte entspricht. In der Ausfräsung selber ist so eine Anlagefläche definiert, in der wiederum eine Vertiefung eingeformt ist, die zur Aufnahme eines entsprechenden Formteiles der Wendeschneidplatte dient. Im Bereich dieser Vertiefung sind im Drehstahlhalteschaft Gewindelöcher eingeformt, mittels der die Wendeschneidplatte in exakt definierter Position am Drehstahlhalteschaft festgeschraubt werden kann.

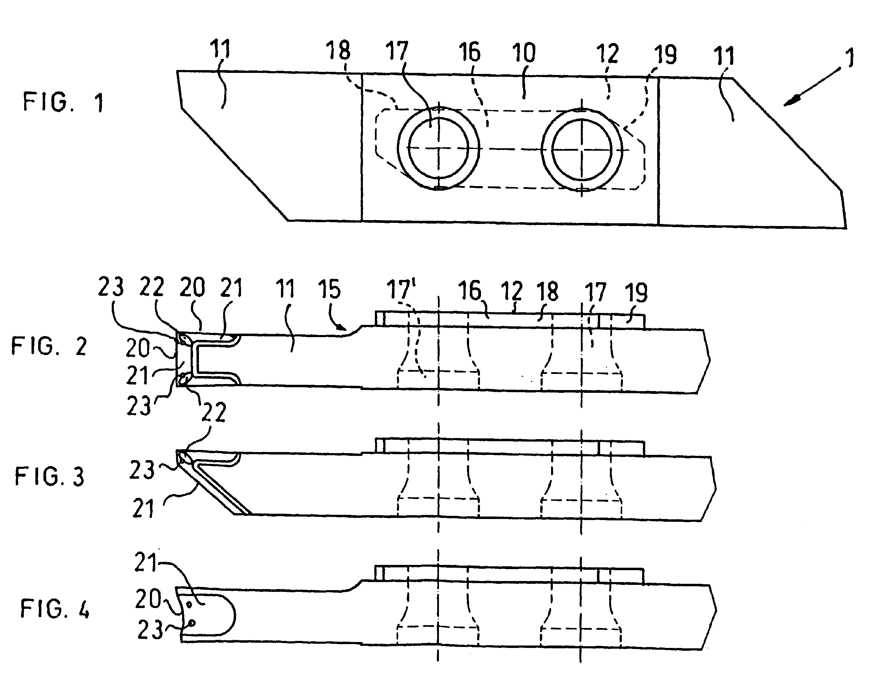

Die Wendeschneidplatte 1 ist in der Figur 1 für sich allein dargestellt. Sie ist bezüglich des Zentrums spiegelsymmetrisch gestaltet. Die Spiegelsymmetrie ergibt sich aus der Notwendigkeit, die Wendeschneidplatte um 180° gedreht jeweils beidseitig verwenden zu können. Die Wendeschneidplatte 2 hat einen gesinterten Körper 10, der in der Seitenansicht nach Figur 1 etwa rechteckig aussieht. An diesem Körper 10 ist beidseitig ein Schneidbereich 11 angeformt. Der Schneidbereich 11 hat die Form eines rechteckigen Trapezes. Zwischen den beiden trapezförmigen Schneidbereichen 11 verbleibt ein Anlagebereich 12. Dieser entspricht dem rechteckigen Bereich des gesinterten Körpers 10. Jene Seite der Wendeschneidplatte 1, die im montierten Zustand vom Drehstahlhalteschaft abgelegen ist, wird als Aussenseite 14 bezeichnet. Entsprechend ist jene Seite der Wendeschneidplatte, die im montierten Zustand zum Drehstahlhalteschaft hin gelegen ist, als Innenseite 15 bezeichnet. Auf der Innenseite 15 ist an der Wendeschneidplatte 1 ein Vorsprung 16 angeformt. Der Vorsprung 16 ist insgesamt etwas kleiner als eine entsprechende Vertiefung im Drehstahlhalteschaft. Der Vorsprung 16 hat die Form eines Parallelogramms, bei dem die spitzwinkligen Enden senkrecht zu den beiden Längsseiten abgeschnitten sind. Im Bereich des Vorsprunges 16 ist die Wendeschneidplatte mit zwei durchgehenden zylindrischen Löchern 17 versehen. Diese sind auf der Aussenseite 14 mit Ansenkungen 17' vertieft.

Der Vorsprung 16, der wie bereits erwähnt die Gestalt eines Parallelogramms mit abgeschnittenen Spitzen hat, besitzt somit zwei parallele Zentrierschultern 18, welche die Längskanten des Vorsprunges 16 sind, sowie zwei geneigte Zentrierschultern 19, die zueinander ebenfalls parallel sind. Die genannten Zentrierschultern 18 und 19 dienen der exakten Positionierung der Wendeschneidplatte auf dem Drehstahlhalteschaft. Diese Art des Aufspannens der Wendeschneidplatte auf einen Drehstahlhalteschaft ist an sich aus der CH-A-686'935 bekannt.

Die Figuren 2, 3 und 4 zeigen Teilansichten der Wendeschneidplatte 1 in Ansicht von oben, wobei einseitig der Schneidbereich 11 weggeschnitten dargestellt ist. Der Schneidbereich 11 ist ein- oder mehrseitig mit einer Schneide 20 oder Schneidkante ausgestaltet. Direkt an der Schneide 20 anschließend ist die Spanleitstufe 21 eingeformt. Die Spanleitstufe bewirkt je nach ihrer Steilheit ein mehr oder weniger starkes Zusammenrollen des Spans zu einer Locke mit kleinerem oder grösserem Durchmesser. Da bei Decolletagearbeiten üblicherweise eine Anzahl von Decolletagewerkzeugen in relativ geringem Abstand zueinander arbeiten, ist einerseits das korrekte Wegführen der Späne wesentlich und zum andern muss auch verhindert werden, dass die Späne sich gegenseitig verhängen. Rollen sich die Späne alle etwa mit gleichem Durchmesser, so ist die Gefahr des gegenseitigen Ineinanderverhängens der Späne wesentlich grösser als im Falle von Spänen, die sich zu Locken unterschiedlichen Durchmessers zusammenrollen.

Vielfach ist die Schneide oder Schneidkante 20 nicht nur am vorderen Ende, sondern auch an den Seitenflächen des Schneidbereiches 11 angeformt. Entsprechend verläuft die Spanleitstufe 21 auch an allen Seitenflächen, an denen eine Schneide 20 angeformt ist. Zwischen zwei winklig aufeinander stossenden Spanleitstufenbereichen zweier winklig aufeinander stossender Schneiden 20 kann eine mit ihrer Längsachse auf die Winkelhalbierende zwischen diesen beiden Schneiden liegende Spanleitstufenwulst geformt sein. Diese Spanleitstufenwulst 22 hat üblicherweise eine etwa ovale, bucklige Form. Die Spanleitstufenwulst 22 dient im wesentlichen als Abweiser. Während der Span im wesentlichen senkrecht zur Schneidkante wegläuft, stösst der Seitenbereich des Spanes an die Spanleitstufenwulst 22 und erzeugt so eine Kraftkomponente, die dazu führt, dass sich der Span nicht nur aufrollt, sondern seitlich wegbewegt, wodurch erst eine längliche Locke entsteht.

Zusätzlich zu den bekannten Spanleitstufenwulsten 22 können Spanleitstufenerhöhungen 23 vorhanden sein. Diese Erhöhungen, die die Form von Spitzen oder Buckeln haben können, verändern entweder den Richtungsverlauf der bereits entstandenen Spanlocken oder diese können so spitzig geformt sein und relativ nahe der Schneide 20, dass der Span in seiner Breite getrennt wird. Folglich entstehen dann zwei Späne und entsprechend auch zwei Spanlocken. Auch diese können wiederum mittels entsprechender Spanleitstufenwulste 22 in ihrer Wickelrichtung beeinflusst werden und mittels weiterer Spanleitstufenerhöhungen in verschiedene Richtungen abgewiesen werden. Dies ergibt eine relativ hohe Anzahl an unterschiedlichen Wendeschneidplatten und entsprechend muss eine relativ hohe Anzahl an Sinterpressformen zur Verfügung gestellt werden. Diese Vielgestaltigkeit ist jedoch durchaus auch ein Verkaufsargument. Auf Grund einer zur Verfügung gestellten Zeichnung bezüglich der zu erstellenden Decolletagewerkstücke lassen sich entsprechend computerisiert die erforderlichen Wendeschneidplatten zusammenstellen, wobei unter Umständen auch der Maschinentyp bekanntgegeben werden muss, da hierdurch die Geometrie der abzuleitenden Späne beeinflusst wird. Da die genannten Gegebenheiten normalerweise geheim gehalten worden sind, mussten entsprechend Fachleute die Wendeschneidplatten den Gegebenheiten entsprechend formen. Zieht man dabei die verschiedenen oben aufgezeigten Möglichkeiten in Betracht, so ist klar, dass diese komplexe Aufgabe wirkliche Fachkräfte benötigt, die heutzutage schwer zu finden sind.

Unter den Fachleuten galt es bisher als unmöglich, Wendeschneidplatten für Decolletagewerkzeuge anzubieten, die diesen Gegebenheiten Rechnung tragen. Tatsächlich hat es sich jedoch gezeigt, dass die Präzision der Sinterpressverfahren heute absolut genügend ist, um entgegen dem Vorurteil der Fachleute auch Wendeschneidplatten für Decolletagewerkzeuge mit Spanleitstufen versehen anzubieten. Zudem ist nach traditioneller Einzelanfertigung die Herstellung von Wendeschneidplatten mit zusätzlichen Formgebungen für die Spanführung oder Trennung so aufwendig, dass die Rohlinge bei der Fertigung zerstört wurden. Die erfindungsgemäss in Sinterpressformen hergestellten Wendeschneidplatten garantieren eine korrekte Gestaltung ohne Abweichungen.

### Liste der Bezugszahlen

- 1: Wendeschneidplatte
- 10: gesinterter Körper
- 11: Schneidbereich
- 12: Anlagebereich
- 14: Aussenseite
- 15: Innenseite
- 16: Vorsprung
- 17: Löcher
- 17': Ansenkungen
- 18: Zentrierschultern
- 19: Geneigte Zentrierschultern
- 20: Schneide oder Schneidkante
- 21: Spanleitstufe
- 22: Spanleitstufenwulst
- 23: Spanleitstufenerhöhungen

## Patentansprüche

1. Verfahren zur Fertigung von Decolletagewerkzeugen in der Form von Wendeschneidplatten aus gesinterten Materialien die zwecks Erreichung einer korrekten Spanführung mit für die jeweils durchzuführende Arbeit erforderlichen Formgebungen versehen sind, nämlich einer Schneidkantengestalt (20), Spanleitstufen (21), Spanleitstufenwulsten (22) und Spanleitstufenerhöhungen (23), wobei zwischen jeweils zwei winklig aufeinander stossenden Spanleitstufen (21) ein mit seiner Längsachse auf der Winkelhalbierenden liegender Spanleitstufenwulst (22) angeordnet ist, und wobei die Wendeschneidplatten in der Endgebrauchsform nachbearbeitungsfrei in einem Sinterpressverfahren gefertigt werden.

2. Verfahren nach Anspruch 1, **dadurch gekennzeichnet, dass** an Hand eines fertigen Werkstückes oder einer Werkstückzeichnung und unter Berücksichtigung des Decolletagemaschinentyps kundenspezifische Sinterpresswerkzeuge erstellt werden und die passenden, nachbearbeitungsfreien Wendeschneidplatten (1) angefertigt werden.

3. Decolletagewerkzeug in der Form einer Wendescheidplatte (1), die nach Anspruch 1 gefertigt ist, **dadurch gekennzeichnet, dass** zwischen jeweils zwei winklig aufeinander stossenden Spanleitstufen (21) ein mit seiner Längsachse auf der Winkelhalbierenden liegender Spanleitstufenwulst (22) angeordnet ist.

4. Decolletagewerkzeug nach Anspruch 3, **dadurch gekennzeichnet, dass** die Wendeschneidplatte (1) als Abstechwerkzeug gestaltet ist. (Fig. 4)

5. Decolletagewerkzeug nach Anspruch 3, **dadurch gekennzeichnet, dass** die Wendeschneidplatte als Einstech- und Längsdrehwerkzeug gestaltet ist. (Fig. 2)

6. Decolletagewerkzeug nach Anspruch 3, **dadurch gekennzeichnet, dass** die Wendeschneidplatte als Rückwärtsdrehwerkzeug gestaltet ist. (Fig. 3)

7. Decolletagewerkzeug nach Anspruch 3, **dadurch gekennzeichnet, dass** die Wendeschneidplatte als Axialstechwerkzeug gestaltet ist.

8. Decolletagewerkzeug nach Anspruch 3, **dadurch gekennzeichnet, dass** die Wendeschneidplatte als Gewindeschneidwerkzeug gestaltet ist.

9. Decolletagewerkzeug nach Anspruch 3, **dadurch gekennzeichnet, dass** auf der Spanleitstufe (21) Spanlenkerhöhungen (23) angeformt sind.

10. Decolletagewerkzeug nach Anspruch 3, **dadurch gekennzeichnet, dass** auf der Spanleitstufenwulst (22) mindestens eine Spanlenkerhöhung (23) angeformt ist.

## Claims

1. A method for manufacturing decolletage tools in the form of indexable cutting inserts from sintered materials which, for the purpose of a correct chip guidance, are provided with the shapes required for the work to be carried out in each case, namely a cutting edge geometry (20), chip guiding steps (21), chip guiding step beads (22) and chip guiding step elevations (23), wherein between in each case two chip guiding steps (21) meeting each other at an angle, a chip guiding bead (22) is arranged which lies with its longitudinal axis on the angle bisector, and wherein the indexable cutting inserts are manufactured in the final form of use in a sinter-pressing method without the need of rework.

2. The method according to claim 1, **characterized in that** based on a finished work piece or a work piece drawing and in consideration of the type of decolletage machine, customer-specific sinter-pressing tools are prepared and the suitable indexable cutting inserts (1) which do not require rework are manufactured.

3. A decolletage tool in the form of an indexable cutting insert (1) manufactured according to claim 1, **characterized in that** between in each case two chip guiding steps (21) meeting each other at an angle, a chip guiding step bead (22) is arranged which lies with its longitudinal axis on the angle bisector.

4. The decolletage tool according to claim 3, **characterized in that** the indexable cutting insert (1) is formed as cut-off tool. (Fig. 4)

5. The decolletage tool according to claim 3, **characterized in that** the indexable cutting insert is formed as plunge-cutting and longitudinal turning tool. (Fig. 2)

6. The decolletage tool according to claim 3, **characterized in that** the indexable cutting insert is formed as reverse turning tool. (Fig. 3)

7. The decolletage tool according to claim 3, **characterized in that** the indexable cutting insert is formed as axial grooving tool.

8. The decolletage tool according to claim 3, **characterized in that** the indexable cutting insert is formed as threading tool.

9. The decolletage tool according to claim 3, **characterized in that** chip guiding elevations (23) are integrally formed on the chip guiding step (21).

10. The decolletage tool according to claim 3, **characterized in that** at least one chip guiding elevation (23) is integrally formed on the chip guiding bead (22).

## Revendications

1. Procédé pour fabriquer des outils de décolletage sous forme de plaquettes amovibles à base de matériaux frittés, qui sont dotés de formes nécessaires pour le travail à effectuer à chaque fois pour obtenir un guidage de copeaux correct, c'est-à-dire d'une forme d'arête de coupe (20), de niveaux de guidage de copeaux (21), de renflements de niveaux de guidage de copeaux (22) et d'éminences de niveaux de guidage de copeaux (23), un renflement de niveau de guidage de copeaux (22) situé avec son axe longitudinal sur la bissectrice étant disposé entre respectivement deux niveaux de guidage de copeaux (21) juxtaposés en formant un angle, et les plaquettes amovibles étant fabriquées dans la forme d'usage final sans retouche dans un procédé de moulage par frittage.

2. Procédé selon la revendication 1, **caractérisé en ce que** des outils de moulage par frittage spécifiques au client sont élaborés et les plaquettes amovibles (1) adaptées et dépourvues de retouche sont fabriquées à l'aide d'une pièce finie ou d'un dessin de pièce et en tenant compte du type de machine de décolletage.

3. Outil de décolletage sous la forme d'une plaquette amovible (1) qui est fabriquée selon la revendication 1, **caractérisé en ce qu'**un renflement de niveau de guidage de copeaux (22) disposé avec son axe longitudinal sur la bissectrice est disposé entre respectivement deux niveaux de guidage de copeaux (21) juxtaposés en formant un angle.

4. Outil de décolletage selon la revendication 3, **caractérisé en ce que** la plaquette amovible (1) est conçue sous forme d'outil à décolleter. (Figure 4).

5. Outil de décolletage selon la revendication 3, **caractérisé en ce que** la plaquette amovible est conçue sous forme d'outil de rectification en plongée et d'outil de tournage longitudinal. (Figure 2).

6. Outil de décolletage selon la revendication 3, **caractérisé en ce que** la plaquette amovible est conçue sous forme d'outil de tournage en marche arrière. (Figure 3).

7. Outil de décolletage selon la revendication 3, **caractérisé en ce que** la plaquette amovible est conçue sous forme de soyage axial.

8. Outil de décolletage selon la revendication 3, **caractérisé en ce que** la plaquette amovible est conçue sous forme d'outil de filetage.

9. Outil de décolletage selon la revendication 3, **caractérisé en ce que** des éminences de guidage de copeaux (23) sont formées sur le niveau de guidage de copeaux (21).

10. Outil de décolletage selon la revendication 3, **caractérisé en ce qu'**au moins une éminence de guidage de copeaux (23) est formée sur le renflement de niveau de guidage de copeaux (22).
